# EUROPEAN PATENT APPLICATION

(11) **EP 3 587 939 A1**
(43) Date of publication of application: **01.01.2020**
(21) Application number: 19183151.0
(22) Date of filing: 28.06.2019
(51) Int. Cl.: F24F 1/0047, F24F 1/0073, F24F 13/28, B01D 46/00, F24F 3/16

(54) **FILTER CLEANING UNIT AND AIR CONDITIONER**

(30) Priority: 29.06.2018 JP 2018124772
(71) Applicant: MITSUBISHI HEAVY INDUSTRIES THERMAL SYSTEMS, LTD., 108-8215 Tokyo (JP)
(72) Inventor: MATSUMOTO, Souichirou, TOKYO, 108-8215 (JP)
(74) Representative: Cabinet Beau de Loménie

(57) **Abstract**

The present invention aims to prevent a nut from being locked at an end section of a shaft, after the nut moves to the end section of the shaft. A filter cleaning unit includes a brush placed along one direction of a filter, a motor, a shaft (25) that is placed so that an axial direction of the shaft is perpendicular to the one direction of the filter, and is connected to the motor to be rotated around an axis by the motor, a nut (26) that is jointed to the shaft (25), and moves along the axial direction of the shaft (25) with the rotation of the shaft (25) around the axis, and a brush fastening part that is placed along the one direction of the filter and to which the brush is fixed, the brush fastening part being connected to the nut (26), wherein the nut (26) has a protruding part (32) that is provided on an inner circumferential surface of the nut to protrude toward a core of the shaft (25), and is movable in a radial direction of the shaft (25) and is engageable with the shaft (25), and a biasing part (33) that biases the protruding part (32) toward a side of the shaft (25).

## Description

### [Technical Field]

The present invention relates to a filter cleaning unit and an air conditioner.

### [Background Art]

Some indoor units of ceiling-embedded type air conditioners include a filter cleaning unit that uses a brush to clean dust and dirt sticking to a filter installed in an intake opening. The brush has a length equal to the width of the filter and is moved along one direction of the filter by a drive mechanism having a motor.

Patent Literature 1 below discloses a technology of removing dust and dirt sticking to a filter by a cleaning unit including a brush unit that moves along the filter and cleans the filter, and a drive unit that drives the brush unit. Patent Literature 2 describes that a nut is engaged with a shaft and moves along the axial direction of the shaft.

### [Citation List]

### [Patent Literature]

[PTL 1] Japanese Unexamined Patent Application, Publication No. 2016-8754
[PTL 2]
   Japanese Unexamined Patent Application, Publication No. H11-276835

### [Summary of Invention]

### [Technical Problem]

Some drive mechanisms for moving the brush include a nut connected to an end section of the brush, and fixed on the brush side, a shaft engaged with the nut, and a motor for rotating the shaft around the axis. The shaft has a male thread formed on the outer circumferential surface of the shaft material and the nut has a female thread formed to engage with the male thread of the shaft. The nut connected to the brush side is moved along the axial direction of the shaft with the rotation of the shaft by the motor.

A limit switch is provided near an end section of the shaft to detect that the brush has reached the end section of the shaft, after the brush has moved along the axial direction of the shaft. When the limit switch detects the brush or the like, the motor stops driving to stop the rotation of the shaft around the axis. Thus, the movement of the brush along the axial direction of the shaft is stopped.

When the limit switch cannot detect the brush due to a failure or the like, since the rotation of the shaft around the axis cannot be stopped, the nut continues to move along the axial direction of the shaft. As a result, the male thread and the female thread are tightened firmly, and the nut is locked at the end section of the shaft. In order to make the nut movable again, it is necessary for an operator to manually release the lock.

The present invention has been made in view of such circumstances, and aims to provide a filter cleaning unit and an air conditioner that can prevent the nut from being locked at the end section of the shaft, after the nut moves to the end section of the shaft.

### [Solution to Problem]

A filter cleaning unit according to a first aspect of the present invention comprises: a brush placed along one direction of a filter; a motor; a shaft that is placed so that an axial direction of the shaft is perpendicular to the one direction of the filter, and is connected to the motor to be rotated around an axis by the motor; a nut that is jointed to the shaft, and moves along the axial direction of the shaft with the rotation of the shaft around the axis; and a brush fastening part that is placed along the one direction of the filter, and to which the brush is fixed, the brush fastening part being connected to the nut, wherein the nut includes: a protruding part that is provided to an inner circumferential surface of the nut to protrude toward a core of the shaft, and is movable in a radial direction of the shaft and is engageable with the shaft; and a biasing part that biases the protruding part toward a side of the shaft.

According to this configuration, the brush and the brush fastening part to which the brush is fixed are placed along the one direction of the filter. Further, the shaft is placed so that the axial direction of the shaft is perpendicular to the one direction of the filter.

The shaft rotates around the axis by the rotation of the motor, and the nut jointed to the shaft moves along the axial direction of the shaft with the rotation of the shaft around the axis. Thereby, the brush fastening part to which the nut is connected moves in the direction perpendicular to the one direction of the filter along the axial direction of the shaft.

The nut has the protruding part and the biasing part, and the protruding part is provided to the inner circumferential surface of the nut to protrude toward the core of the shaft. Further, the protruding part is biased toward the shaft side by the biasing part, and engageable with the shaft. Furthermore, the protruding part is movable radially outward or inward of the shaft. Therefore, when the nut moves along the axial direction of the shaft, and reaches an end section of the shaft, the protruding parts move radially outward, without the protruding parts remaining engaged with the shaft. As a result, the movement of the nut is stopped. Further, the male thread and the female thread cannot be tightened firmly, and the shaft idles without being locked the nut and the shaft.

In the above aspect, the shaft may have a shaft member and a linear member spirally wound around the outer circumferential surface of the shaft member, and the protruding parts may be placed between pitches of the linear member.

According to this configuration, the shaft has the shaft member and the linear member, and the linear member is spirally wound around the outer circumferential surface of the shaft member. Further, the protruding parts provided to the inner circumferential surface of the nut are placed between the pitches of the linear member wound around the outer circumferential surface of the shaft. Thus, since the protruding part of the nut slides, along the linear member of the shaft, with the rotation of the shaft around the axis, the nut moves along the axial direction of the shaft.

When the nut moves along the axial direction of the shaft, and reaches the end section of the shaft, the protruding part is pushed radially outward by the linear member, and the protruding part moves radially outward. As a result, the movement of the nut is stopped, and the shaft idles without the nut and the shaft being locked.

In the above aspect, a plurality of the protruding parts may be provided along the axial direction of the shaft.

According to this configuration, since the nut is less likely to be inclined to any one of axial end sections, the nut is likely to move stably along the shaft.

An air conditioner according to a second aspect of the present invention comprises the above-described filter cleaning unit.

### [Advantageous Effects of Invention]

According to the present invention, it is possible to prevent the nut from being locked at the end section of the shaft, after the nut moves to the end section of the shaft.

### [Brief Description of Drawings]

FIG. 1 is a longitudinal sectional view showing an indoor unit of a ceiling-embedded type air conditioner according to one embodiment of the present invention.
FIG. 2 is a perspective view showing the indoor unit of the ceiling-embedded type air conditioner according to one embodiment of the present invention.
FIG. 3 is a plan view showing a shaft according to one embodiment of the present invention.
FIG. 4 is a perspective view showing a nut according to the embodiment of the present invention.
FIG. 5 is a longitudinal sectional view showing the shaft and the nut according to the embodiment of the present invention.
FIG. 6 is a perspective view showing a modification of a nut according to the embodiment of the present invention.
FIG. 7 is a longitudinal sectional view showing a modification of a shaft and a nut according to the embodiment of the present invention.

### [Description of Embodiment]

Hereinafter, a ceiling-embedded type air conditioner according to one embodiment of the present invention will be described with reference to the drawings.

The ceiling-embedded type air conditioner (hereinafter referred to as the "air conditioner") includes an indoor unit 1, an outdoor unit (not shown), a refrigerant pipe (not shown) connecting the indoor unit 1 and the outdoor unit, and so on.

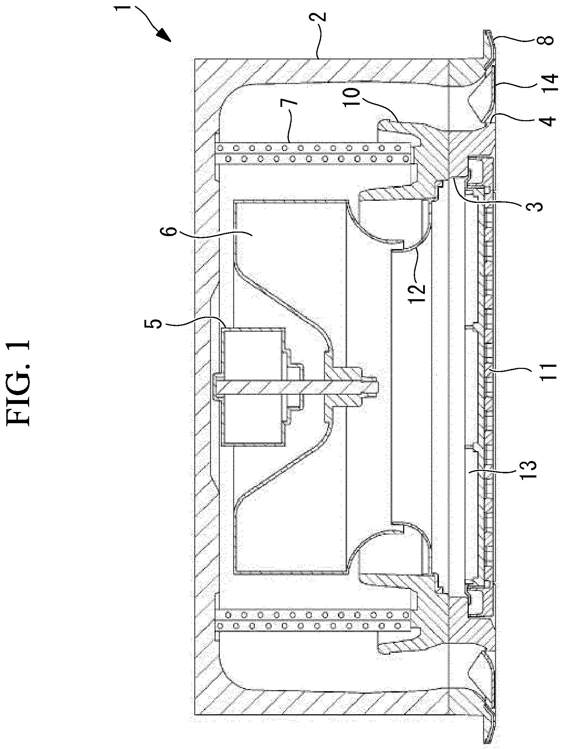

The indoor unit 1 is installed so that a case main body 2 is embedded in the ceiling. As shown in FIG. 1, the case main body 2 includes a heat exchanger 7, a drain pan 10, a motor 5, a fan 6, a bell mouth 12, etc. therein, and a panel part 8 to be exposed in the ceiling surface is attached to a lower section of the case main body 2.

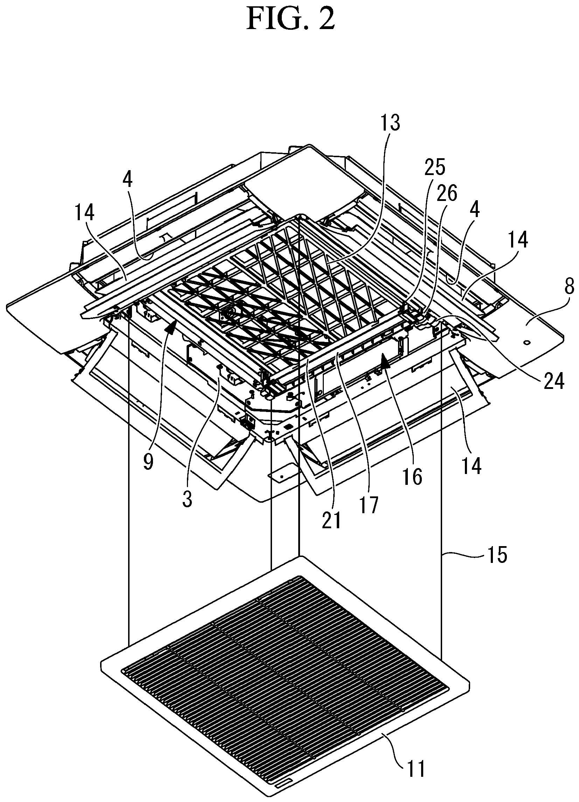

As shown in FIG. 1 and FIG. 2, an intake opening 3 is formed in a central section of a lower surface of the indoor unit 1, and a discharge opening 4 which is elongated in one direction along an outer peripheral section of the lower surface of the indoor unit 1 is formed at a position adjacent to the intake opening 3. In the intake opening 3, an intake grille 11 and a filter 13 above the intake grille 11 are installed. The drain pan 10 is installed under the heat exchanger 7 and receives drained water dripping from the heat exchanger 7. The bell mouth 12 is installed at a lower section of the drain pan 10.

When the air conditioner is operated, a refrigerant from the outdoor unit (not shown) circulates through the heat exchanger 7, and the fan 6 is driven by the motor 5. When the fan 6 is driven, room air passes from the intake opening 3 through the intake grille 11 and the filter 13 and is guided by the bell mouth 12 and drawn into the fan 6. The air discharged from the fan 6 is cooled or heated by passing through the heat exchanger 7, and then discharged from the discharge opening 4 into the room.

A louver 14 is elongated in one direction in conformity with the shape of the discharge opening 4, and the louver 14 is turned around an axis parallel to the longitudinal direction. Hence, an air flow discharged from the discharge opening 4 is directed upward or downward by changing the direction of the louver 14.

The filter 13 removes dust, dirt and the like contained in the drawn air. The filter 13 has a quadrangular shape like the intake opening 3, and is placed near the center of the intake opening 3. Moreover, at the four corners of a frame part of the intake grille 11, wires 15 that move up and down the intake grille 11 are placed.

The indoor unit 1 according to the present embodiment includes a filter cleaning unit 16. As shown in FIG. 2, on the lower surface of the filter 13, the filter cleaning unit 16 is installed on the panel part 8 and has a brush 17 which is equal to or longer than the length of one side of the filter 13 in one direction. The brush 17 of the filter cleaning unit 16 moves in contact with the surface of the filter 13 from a side at one end of the filter 13 to a side on the other end, thereby removing dust and dirt sticking to the filter 13. The filter cleaning unit 16 starts operating based on a control signal for operation control.

As shown in FIG. 2, the filter cleaning unit 16 includes a frame part 9 detachably installed on the panel part 8, the brush 17, a brush fastening part 21, and a motor 24, etc. installed on the frame part 9.

The frame part 9 has a quadrangular shape like the intake opening 3, and is placed near the center of the intake opening 3. The filter 13 is installed on the frame part 9, and the frame part 9 is attachable to the panel part 8 and is detachable from the panel part 8.

The brush 17 has a shaft material elongated in one direction, and a large number of bristles arranged from one end to the other end in the axial direction on an outer circumferential surface of the shaft material. The brush 17 has a brush rotating gear (not shown) that engages with a pinion gear at each end thereof. Further, the brush 17 is supported by the brush fastening part 21 at both ends.

As shown in FIG. 2, the brush fastening part 21 is a member elongated in a direction parallel to the axial direction of the brush 17, and stores the brush 17 therein. The brush fastening part 21 has a shape surrounding the brush 17 and exposes the brush 17 on the filter 13 side. A total of two pinion gears (not shown), one for each end section in the longitudinal direction of the brush fastening part 21, are rotatably mounted. The brush fastening part 21 is supported by rack gears (not shown) through the pinion gears. By moving the brush fastening part 21 along the rack gears, the brush fastening part 21 and the brush 17 move along the surface of the filter 13 from the side on one end of the filter 13 to the side on the other end.

Since the brush fastening part 21 is supported by the pinion gears and the rack gears on both sides in one direction of the filter 13, the brush fastening part 21 and the brush 17 move reliably.

The pinion gear is installed in each end section of the brush fastening part 21. The pinion gear engages with the rack gear. As the brush fastening part 21 moves, the pinion gear moves on the rack gear, and is driven and rotated by a force transmitted from the rack gear. The rack gear is installed on the outside of the filter 13 so that the axial direction is perpendicular to the axial direction of the brush 17. The length of the rack gear is equal to or longer than the length of one side of the filter 13.

One brush rotating gear is provided for each pinion gear, and engages with the pinion gear. As the pinion gear rotates, the brush rotating gear is driven and rotated by a force transmitted from the pinion gear. As a result, the brush 17 mounted on the brush rotating gears is rotated, and the brush 17 is rotated along with the movement of the brush 17.

The pinion gear is a member which is not connected to the motor 24 and operates in a driven manner. In the present embodiment, since the pinion gears are mounted on the brush fastening parts 21, unlike Patent Literature 1, a propulsion shaft connecting two pinion gears is not necessary.

As shown in FIG. 2, only one set of drive mechanism including the motor 24, a shaft 25 and a nut 26 need to be placed along one side of the filter 13.

The motor 24 is fixedly mounted on the frame part 9 of the filter cleaning unit 16. The motor 24 is connected to the shaft 25, and the shaft 25 rotates around the axis as the motor 24 is driven. The shaft 25 is a shaft material that is elongated in one direction and has a male thread formed on the outer circumferential surface of the shaft material, and engages with the nut 26. The shaft 25 is installed so that the axial direction is perpendicular to the axial direction of the brush 17, that is, in a direction parallel to the rack gear. The shaft 25 is equal to or longer than the length of one side of the filter 13 in one direction.

On the inner circumferential surface of the nut 26, a female thread, which engages with the male thread of the shaft 25, is formed. The nut 26 is connected to the brush fastening part 21 so as not to rotate around the axis of the shaft 25. Although the nut 26 is not fixed to the brush fastening part 21, the nut 26 is connected to the brush fastening part 21 so that the nut 26 can push the brush fastening part 21. Hence, as the shaft 25 rotates, the nut 26 moves, and the nut 26 pushes the brush fastening part 21 and moves along the axial direction of the shaft 25. By changing the rotation direction of the shaft 25, the advancing direction of the nut 26 and the brush fastening part 21 can be changed.

In the above-described example, an example in which the male thread is formed on the shaft 25 and the female thread is formed in the nut 26 and coupled together has been described, but the present invention is not limited to this example. For instance, the shaft 25 and the nut 26 may be configured to provide a ball screw mechanism with a combination of the shaft 25 and the nut 26.

In the present embodiment, only one motor 24 needs to be installed, and the brush 17 can be moved with a simple structure.

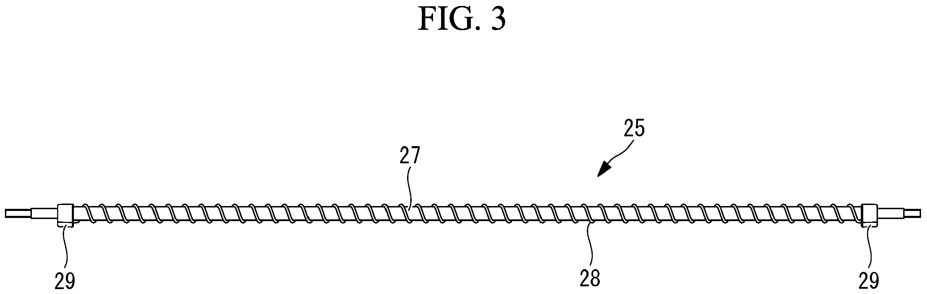

The shaft 25 and the nut 26 will now be described with reference to FIG. 3 to FIG. 7.

As shown in FIG. 3, the shaft 25 includes a shaft member 27, a wire 28, a fastener 29 and the like.

The shaft member 27 has a circular cross section, for example, and the wire 28 is wound around the outer circumferential surface. The part of the outer circumferential surface of the shaft member 27 around which the wire 28 is wound has substantially the same thickness from one end to the other end.

The wire 28 is a linear member having a diameter smaller than that of the shaft member 27, and is placed by being spirally wound on the outer circumferential surface of the shaft member 27. The wire 28 is wound so that the pitch of the wire 28 is longer than the diameter of the wire 28. Since the pitch is wider than when a triangular thread is formed on the outer circumferential surface of the shaft member 27, the moving speed in the axial direction of the nut 26 can be increased, even when the number of rotations around the axis of the shaft 25 is made equal to that in the conventional case. The wire 28 is an example of a linear member.

The fastener 29 is a member for fixing the wire 28 to the shaft member 27 and is provided at each end of the wire 28. The fasteners 29 firmly fix end sections of the shaft member 27 and the wire 28 to each other.

The wire 28 is fixed to the shaft member 27 only at the both ends, and is disposed without being fixed except at the both ends. The wire 28 may be fixed to the shaft member 27 at all sections along the axial direction from one end to the other end. In this case, the wire 28 is fixed to the shaft member 27 along the axial direction by an adhesive or the like.

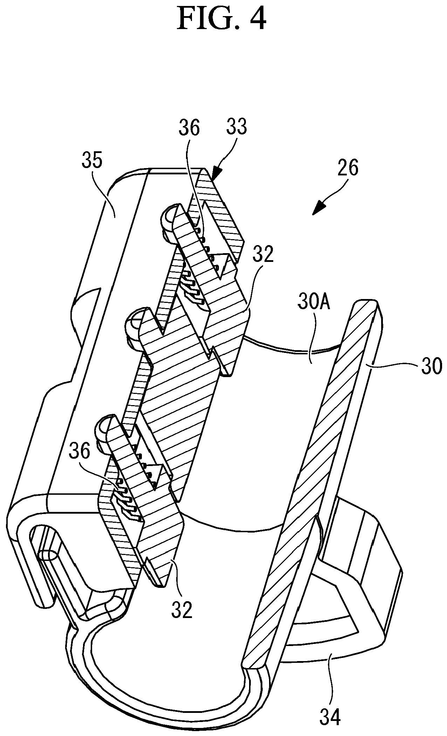

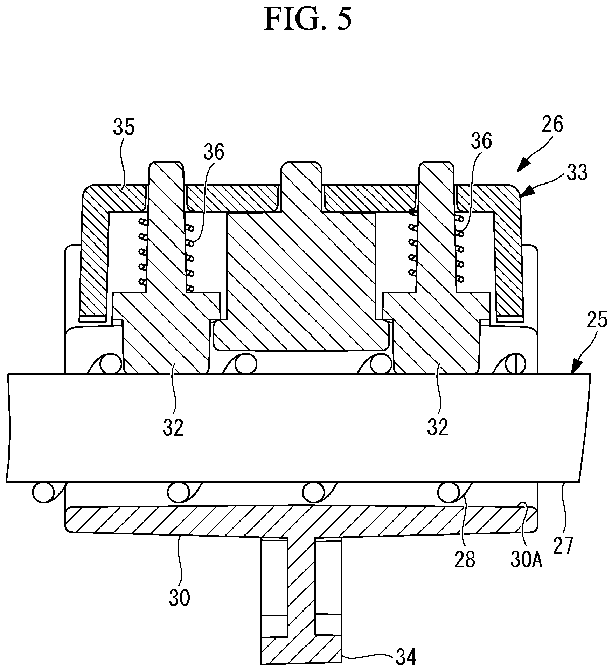

As shown in FIG. 4 and FIG. 5, the nut 26 has a nut main body 30, protruding parts 32, a biasing part 33 and the like.

The nut main body 30 is a cylindrical member, and a through hole 30A penetrating from one end to the other end is formed therein. The shaft 25 is placed inside the nut main body 30, that is, inside the through hole 30A.

A flange 34 protruding in the radial direction of the nut main body 30 may be provided on the outer circumferential surface of the nut main body 30. The flange 34 is a platelike member, and is used for connection with the brush fastening part 21.

The protruding parts 32 placed between the pitches of the wire 28 are provided to the inner circumferential surface of the nut main body 30. The protruding parts 32 are provided to protrude from the inner circumferential surface of the nut main body 30 toward the core of the shaft 25. The protruding parts 32 are movable in the radial direction of the shaft 25, and engageable with a wire 28 spirally provided on the shaft 25.

The protruding parts 32 are biased toward the shaft 25 by the biasing part 33. Each biasing part 33 has a support part 35 and a compression spring 36. The support part 35 is connected to the nut main body 30, and the longitudinal direction is placed parallel to the axial direction of the shaft 25. The compression spring 36 is placed between the support part 35 and the outer circumferential surface of the nut main body 30. One end of the compression spring 36 is in contact with the support part 35, and the other end is in contact with the surface of the protruding part 32 opposite to the shaft 25 side.

A plurality of, for example, two protruding parts 32 are placed along the axial direction of the shaft 25. Thus, since the nut 26 is less likely to be inclined to any one of axial end sections, the nut 26 can be stably moved along the shaft 25.

Thereby, since the protruding parts 32 slide along the wires 28, with the rotation of the shaft 25 around the axis, in a state where the protruding parts 32 are in contact with the outer circumferential surface of the shaft member 27 of the shaft 25, the nut 26 moves along the axial direction of the shaft 25. As a result, the brush fastening part 21 to which the nut 26 is connected moves in the direction perpendicular to the one direction of the filter 13, along the axial direction of the shaft 25.

Further, a limit switch (not shown) is provided near an end section of the shaft 25. The limit switch detects presence or absence of the brush 17 or the brush fastening part 21 connecting the brush 17 and the shaft 25. When the limit switch operates normally, when the nut 26 moves along the axial direction of the shaft 25 to reach the end section of the shaft 25, and the limit switch detects the brush 17 or the brush fastening part 21, the motor 24 stops driving. Thereby, the rotation around the axis of the shaft 25 is stopped, and the movement of the brush 17 along the axial direction of the shaft 25 is stopped.

On the other hand, when the limit switch does not operate normally due to a failure or the like, and the brush 17 or the brush fastening part 21 cannot be detected, the nut 26 continues to move along the axial direction of the shaft 25. When the nut 26 moves along the axial direction of the shaft 25, and reaches the end section of the shaft 25, the protruding part 32 is pushed radially outward by the wire 28. Thus, the compression spring 36 contracts, and the protruding part 32 moves radially outward, without the protruding part 32 remaining engaged with the shaft 25. As a result, even when the shaft 25 continues to be rotated around the axis by the motor 24, the movement of the nut 26 along the axial direction is stopped. Then, the male thread and the female thread are not tightened firmly, and the shaft 25 idles, without the nut 26 and the shaft 25 being locked.

From the above, even when the limit switch cannot detect the brush 17 or the brush fastening part 21 due to a failure or the like, and the rotation around the axis of the shaft 25 cannot be stopped, the movement of the nut 26 along the axial direction of the shaft 25 is stopped by the protruding part 32 moving radially outward. As a result, the nut 26 is not locked at the end section of the shaft 25. Therefore, in order to make the nut movable again, it becomes unnecessary for an operator to manually release the lock. In the present embodiment, by reversely rotating the idling shaft 25, the nut 26 and the shaft 25 are engaged again, and the nut 26 moves in the opposite direction. When the limit switch fails, after the nut 26 reaches the end section, to prevent the shaft 25 from continuing to idle, control to stop the rotation of the motor 24 may be performed by a timer or the like.

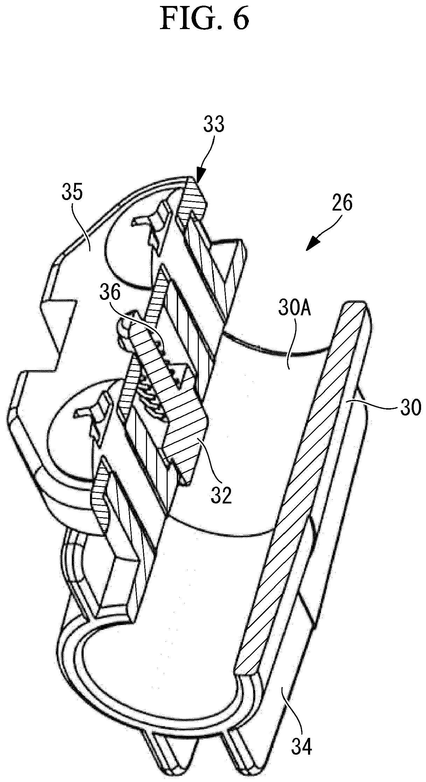

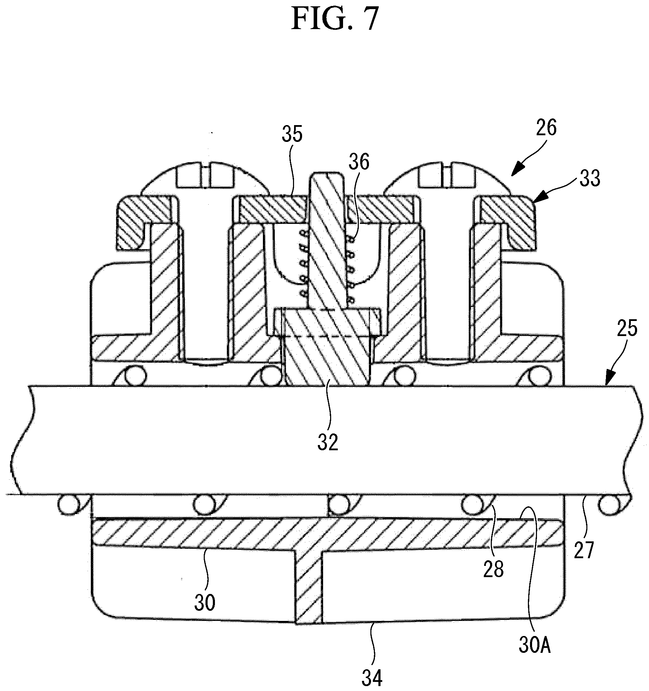

Although in the above embodiment, the case where a plurality of protruding parts 32 are provided along the axial direction of the shaft 25 has been described, the invention is not limited to this example. For example, as shown in FIG. 6 and FIG. 7, only one protruding part 32 may be formed on the axially intermediate section of the nut 26. In this case, the nut 26 is supported by the protruding part 32, on the shaft 25 at an axially intermediate section. If the axial length of the nut 26 is increased, it is less likely to be inclined to any one of the axial end sections.

### [Reference Signs List]

- 1: Indoor unit
- 2: Case main body
- 3: Intake opening
- 4: Discharge opening
- 5: Motor
- 6: Fan
- 7: Heat exchanger
- 8: Panel part
- 9: Frame part
- 10: Drain pan
- 11: Intake grille
- 12: Bell mouth
- 13: Filter
- 14: Louver
- 15: Wire
- 16: Filter cleaning unit
- 17: Brush
- 21: Brush fastening part
- 24: Motor
- 25: Shaft
- 26: Nut
- 27: Shaft member
- 28: Wire (linear member)
- 29: Fastener
- 30: Nut main body
- 30A: Through hole
- 32: Protruding part
- 33: Biasing part
- 34: Flange
- 35: Support part
- 36: Compression spring

## Claims

1. A filter cleaning unit (16) comprising:
a brush (17) placed along one direction of a filter (13);
a motor (24);
a shaft (25) that is placed so that an axial direction of the shaft is perpendicular to the one direction of the filter (13), and is connected to the motor (24) to be rotated around an axis by the motor (24);
a nut (26) that is jointed to the shaft (25), and moves along the axial direction of the shaft (25) with the rotation of the shaft (25) around the axis; and
a brush fastening part (21) that is placed along the one direction of the filter (13) and to which the brush (17) is fixed, the brush fastening part (21) being connected to the nut (26),
wherein the nut (26) includes:
a protruding part (32) that is provided on an inner circumferential surface of the nut to protrude toward a core of the shaft (25), and is movable in a radial direction of the shaft (25) and is engageable with the shaft (25); and
a biasing part (33) that biases the protruding part (32) toward a side of the shaft (25).

2. The filter cleaning unit (16) according to claim 1, wherein the shaft (25) includes:
a shaft member (27); and
a linear member (28) spirally wound around an outer circumferential surface of the shaft member (27), and
the protruding part (32) is placed between pitches of the linear member (28).

3. The filter cleaning unit (16) according to claim 1 or 2, wherein a plurality of the protruding parts (32) are provided along the axial direction of the shaft (25).

4. An air conditioner comprising the filter cleaning unit (16) according to any one of claims 1 to 3.
